# EUROPEAN PATENT APPLICATION

(11) **EP 1 108 506 A2**
(43) Date of publication of application: **20.06.2001**
(21) Application number: 01100307.6
(22) Date of filing: 29.07.1996
(51) Int. Cl.: B27C 1/04, B27C 1/14, B23Q 17/22

(54) **Portable woodworking power tool with material removal indicator**

(30) Priority: 27.07.1995 US 2433 P; 05.06.1996 US 659684
(62) Divisional of application: 96305549.6
(71) Applicant: Black & Decker Inc., Newark Delaware 19711 (US)
(72) Inventor: Welsh, Robert E., Hunt Valley, Maryland 21030 (US); Gehret, Robert S., Hampstead, Maryland 21074 (US); O'Banion, Michael L., Westminster, Maryland 21157 (US); Boyd, P Brent, Stewartstown, Pennsylvania 17363 (US); Wixley, Barry D., Finksburg, Maryland 21048 (US); Shadeck, Louis M., Timonium, Maryland 21093 (US)
(74) Representative: Dlugosz, Anthony Charles

(57) **Abstract**

An improved portable wood planing machine (10) for the surface planing of wooden planks or boards is provided. The machine includes a material removal indicator assembly (370) operable to allow the user of the planing machine (10) accurately to determine the amount of material to be removed during each pass of the workpiece (29).

## Description

The present invention relates in general to wood working. More particularly, the present invention relates to a portable wood planing machine for the surface planing of wooden planks or boards.

Various power tools are used in woodworking in an effort to efficiently and accurately to cut workpieces to desired dimensions and surface quality. As is widely known, planing machines are often used for surface planing of wooden boards. A conventional planing machine typically includes one or more rotatably mounted cutting blades attached to a vertically movable carriage assembly. Also known are jointer machines which are typically used for the edge planing of wood. In certain applications, the functions of conventional planing machines and jointers are combined within a single unit commonly referred to as a jointer/planer machine.

In a typical wood planing machine, such as a surface planer, a selectively adjustable workpiece opening is defined between a carriage assembly and a support surface. The one or more rotationally mounted blades are carried on the underside of the carriage assembly adjacent the workpiece opening. The blades are adapted to remove a predetermined amount of material from the workpiece depending on the height of the workpiece opening. The carriage assembly also usually includes one or more feed rollers which urge the workpiece through the workpiece opening during operation of the wood planing machine.

In most applications, the carriage assembly of a wood planing machine is movably mounted to a plurality of support columns for movement with respect to a workpiece support surface, such as a base or platen. Such movement of the carriage assembly adjusts the vertical dimension of the workpiece opening so as to selectively determines the amount of material to be removed from the workpiece. Alternatively, in certain applications it is desirable fixedly to mount the carriage assembly and to adjust the workpiece opening by moving the base or platen vertically with respect to the carriage assembly.

In use, a workpiece is passed through the workpiece opening and a predetermined amount of material is removed from the surface of the workpiece adjacent the carriage assembly. Multiple passes of the workpiece through the workpiece opening are often necessary to obtain the desired thickness and surface quality. As with other woodworking operations, it is desirable that a planing machine accomplish workpiece preparation with precise tolerances, high surface quality, and a significant degree of reproducible results.

It is known in the field of woodworking to provide a gauge for a wood planing machine which indicates the amount of material removed from a workpiece. While prior known devices are available for determining the amount of material removed from a workpiece, all are associated with one or more disadvantages. To overcome the disadvantages of prior known devices, it is desirable to provide a material removal indicator assembly for a wood planing machine from which the amount of material removed from a workpiece can be quickly obtained visually. Also, it is desirable to provide a material removal indicator assembly having a higher degree of accuracy as compared to prior known devices. Further, it is desirable to provide a material removal gauge adapted to assist the user in discerning between small increments.

According to the present invention there is provided apparatus for performing a forming operation on a workpiece the apparatus comprising;
a frame;
a carriage assembly interconnected to the frame, said carriage assembly including a workpiece forming clement;
a workpiece support surface disposed relative to the carriage assembly so as to define a workpiece opening therebetween; and
one of the carriage assembly and the workpiece support surface mounted within the apparatus for selective bi-directional movement along a path of travel, the other of the carriage assembly and the workpiece support surface fixedly mounted within the apparatus, characterised in that the apparatus further comprises;
a material removal indicator assembly for visually indicating the amount of material removed from the workpiece, during a pass through the workpiece opening the indicator assembly including an indicator attached to the carriage assembly, a workpiece engaging member adapted to be displaced by the workpiece as the workpiece is passed through said workpiece opening and a scale portion stamped with indica incrementally representing the amount of material being removed from the workpiece during a pass through the workpiece opening, the indicator being located relative to the workpiece engaging member and the scale such that displacement of the workpiece engaging member results in a corresponding magnified movement of the indicator relative to the scale portion.

In a preferred embodiment the indicator is pivotally attached to the said carriage assembly. Preferably, the workpiece engaging member is fixedly attached to the carriage assembly, the workpiece engagement member being resiliently deflectable in response to movement of the workpiece through the workpiece opening.

The workpiece engaging member is preferably attached to the carriage assembly of the planing machine and adapted to be deflected by a workpiece as the workpiece is introduced into the planing machine. Preferably, the point of the indicator which contacts the workpiece engaging member is disposed relative to its pivot axis such that when the workpiece engaging member moves slightly, a tip of the indicator moves substantially more with respect to indicia on the carriage assembly numerically indicating the amount of material being removed from a workpiece. As a result, small adjustments to the amount of material to be removed from a workpiece arc visually recognise more easily.

Preferred embodiments of the planing machine according to the present invention will now be described with reference to the accompanying drawings in which:
Figure 1 is a perspective view of a portable wood planing machine constructed in accordance with a preferred embodiment of the present invention illustrating a workpiece such as a wooden board in broken lines partially inserted between the carriage assembly and platen of the planing machine;
Figure 2 is an exploded perspective view of various elements of the portable wood planing machine of Figure 1 generally associated with an upper portion thereof;
Figure 3 is an exploded perspective view of various elements of the portable wood planing machine of Figure 1 generally associated with a lower portion thereof;
Figure 4 is a simplified front view of a portion of the material removal indicator assembly shown in Figure 1 illustrating an indicator in operative relationship with a workpiece engaging member;
Figure 5 is a side view of the material removal indicator assembly of Figure 4 illustrated in operative engagement with a workpiece (shown in broken lines);
Figure 6 is a front view of a scale magnification assembly; and
Figure 7 is a cross-sectional view taken through the line 29-29 of Figure 6.

The present invention provides an improved portable wood planing machine for the surface planing of a workpiece such as a wooden board or plank. As will become apparent below, the present invention more particularly relates to various features of a planing machine. Many of these various features, which are described in detail below, are shown co-operatively arranged within a single planing machine. However, it will be appreciated that the scope of the present invention as it independently relates to each of the features described is not so limited. In other words, while an exemplary embodiment of a planing machine is shown and described, it will be understood that the various features may be utilised independent from one another.

The principal feature of the present invention which will be described in detail below relates generally to a material removal indicator assembly. Prior to addressing the various features of the present invention, an understanding of an exemplary machine into which such features may be incorporated is warranted.

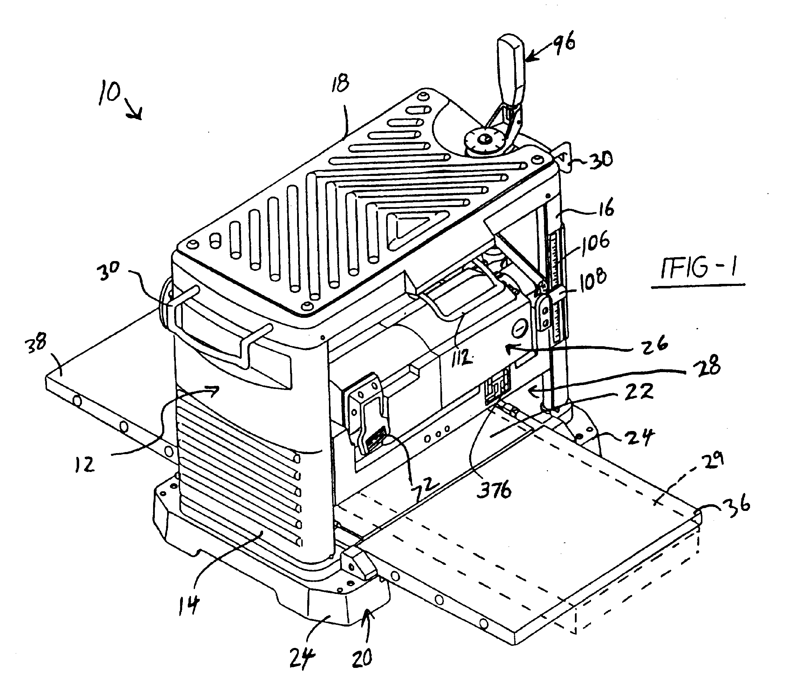

Turning generally to the drawings in which identical or equivalent elements have been denoted with like reference numerals and specifically to Figures 1 through 3 thereof, an exemplary wood planing machine constructed in accordance with the teachings of the present invention is illustrated and identified generally at reference numeral 10. The planing machine 10 is shown to include a frame 12 having a pair of opposing sides 14 and 16, a top 18 and base 20 including a support platen 22 and a pair of support feet 24. The elements of the frame 12 are interconnected in a conventional manner with threaded fasteners 25.

The planing machine 10 is also shown to include a carriage assembly 26 including an integrally formed casting 27. The carriage assembly 26 co-operates with the support platen 22 to define a workpiece opening 28. In one application, the workpiece opening 28 of the portable wood planing machine 10 is sized to accommodate a workpiece 29 (shown in hidden lines in Figure 1) having a nominal width of 32cm (12½") or less. Transfer of the portable planing machine 10 is facilitated through a pair of carry handles 30 extending from opposing sides of the top 18 which are retractable to storage positions.

The planing machine 10 also includes forwardly extending and rearwardly extending feed tables 36 and 38 for further supporting the workpiece during operation of the planing machine 10. The forwardly and rearwardly extending feed tables 36 and 38 are each pivotally attached to the base 20 through a pair of support arms 40 which are attached to the feed tables 36 and 38 with fasteners. More specifically, fasteners 44 pass through apertures 46 formed in the ends of the support arms 40 and engage threaded apertures 48 formed in integrally formed boss portions 50 of the base 20. As a result, the forwardly and rearwardly extending feed tables 36 and 38 are upwardly foldable from their positions shown in Figure 1 to storage positions substantially adjacent the front and rear of the planing machine 10, respectively.

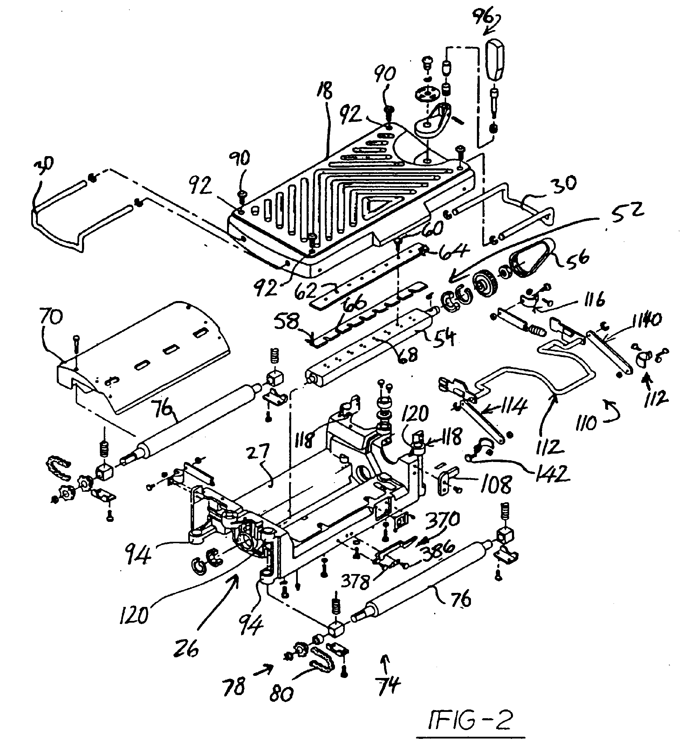

With reference to the exploded view of Figure 2, a cutter head assembly 52 is shown to be carried by the carriage assembly 26 adjacent the workpiece opening 28 and is generally identified with reference numeral 52. The cutter head assembly 52 includes a cutter head 54 rotationally mounted to the carriage assembly 26 in a generally conventional manner and driven by a belt 56 interconnected to an electric motor (not shown). The cutter head assembly 52 further includes at least one blade 58 removably attached to the cutter head 54. As illustrated, the blade 58 is attachable to the cutter head 54 by fasteners 60 which pass through holes 62 formed in a retention plate 64 and slots 66 in the blade 58 and engage aligning threaded apertures 68 formed in the cutter head 58. Power to the motor is controlled by a manually operated switch 72 extending from the front face of the carriage assembly 26. During normal operation, the cutter head assembly 52 is shielded by a cover 70 assembly. The cover 70 is removably attached to the carriage assembly 26 in a conventional manner to facilitate blade replacement.

A workpiece feed arrangement 74 including a pair of feed rollers 76 is also carried by the carriage assembly 26. The feed rollers 76 are positioned adjacent the workpiece opening 28 and are driven by a motor (not shown) located within the carriage assembly 26. A drive arrangement 78 includes a drive chain (partially shown in Figure 2 at 80) which interconnects the motor and the pair of feed rollers 76. During operation, rotation of the feed rollers 80 functions to draw the workpiece 29 through the workpiece opening 28 at a controlled rate and further functions to position the workpiece 29 a constant vertical distance from the cutter head 54.

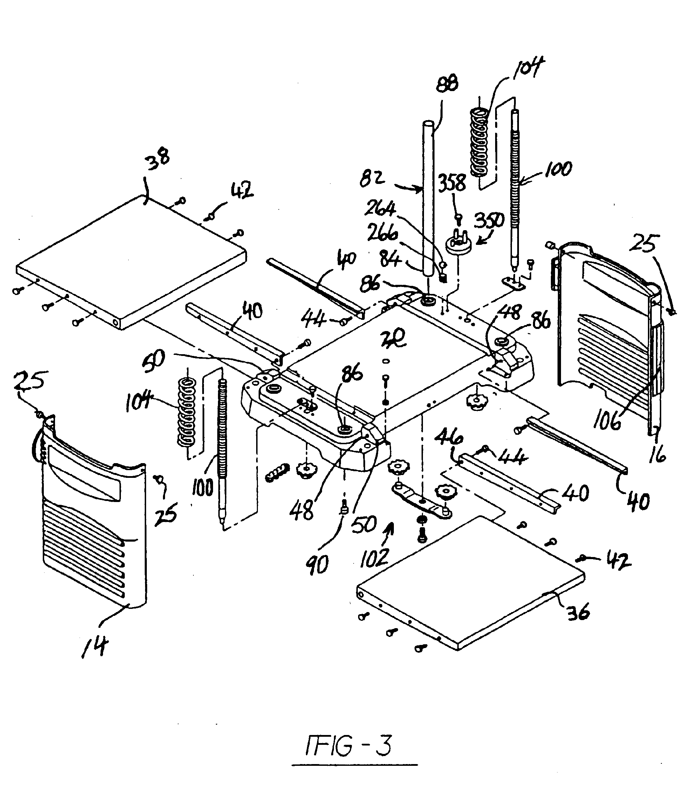

With specific reference to the exploded views of Figures 2 and 3, the carriage assembly 24 is shown to be slidably mounted to a plurality of support columns or support posts for bi-directional vertical movement. Figure 3 illustrates one of the support columns which has been identified with reference numeral 82. Each of the plurality of support columns 82 is generally cylindrical and includes a lower end 84 which engages a circular recesses 86 formed in the base 20 of the frame 12. The support columns 82 also include upper ends 88 which engage similar recesses (not shown) formed in the underside of the top 18. Threaded fasteners 90 pass through apertures 92 in the top 18 and base 20 and engage tapped holes (not shown) in the lower and upper ends 84 and 80 of the support columns 82. In the embodiment illustrated, four support columns 82 support the carriage assembly 24. The carriage assembly 24 may selectively be translated upward or downward along a path of travel and is guided by integrally formed apertures 94 located in the four corners of casting 26 of the carriage assembly 24.

The depth of cut of the workpiece 29 is selected through adjustment of the height of the carriage assembly 26 relative to the base 20. Adjustment is controlled through manual rotation of a handle assembly 96 interconnected to a pair of drive rods 100. The drive rods 100 threadably engage the casting 27 of the carriage assembly 26 and are interconnected at their lower ends with a sprocket arrangement 102.

A coil spring 104 surrounds the lower portion of each of the drive rods 100. The coil springs 104 are operative for producing an upwardly directed force which opposes a substantial portion of the weight of the carriage assembly 26. As a result, a comparable amount of effort is required for vertically advancing the carriage assembly 26 in either of an upward direction or a downward direction.

As shown in Figure 2, a depth scale 106 is attached to the side 14 of the frame 12 which is marked with indicia indicating the desired thickness for the workpiece 29. The depth scale 106 co-operates with a pointer 108 carried by the carriage assembly 26. As the carriage assembly 26 is vertically translated, the location of the pointer 108 on the depth scale 106 indicates the desired thickness of the workpiece 29.

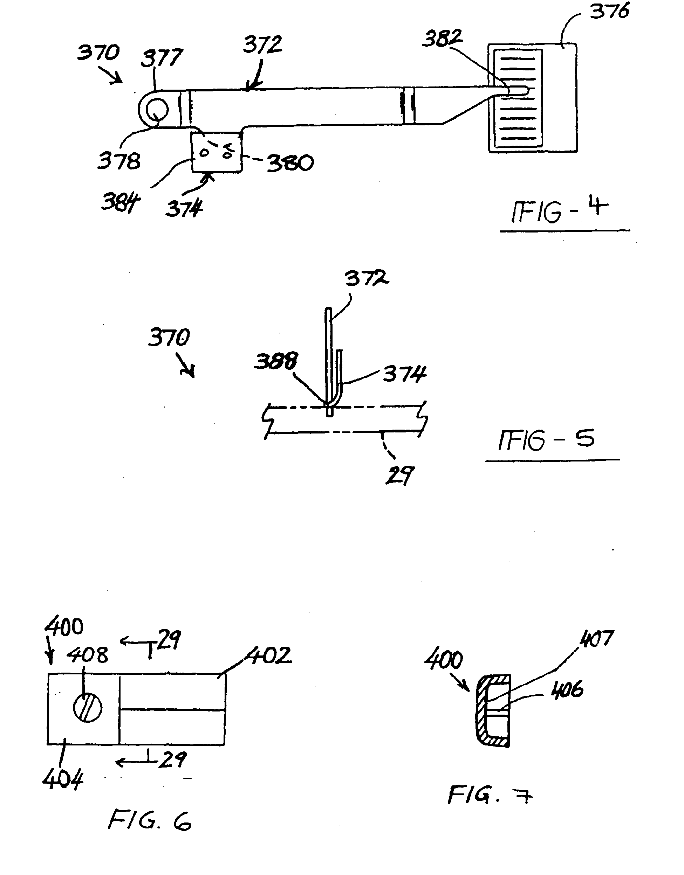

With continued reference to Figures 1 and 2 and additional reference to Figures 4 through 5, a material removal indicator assembly 370 of the present invention will now be described. The material removal indicator assembly 370 is shown comprising indicator 372 pivotally attached to the carriage assembly 26, a workpiece engagement member 374 and a scale 376.

The indicator 372 of the material removal indicator assembly 370 of the present invention is formed at a first end 377 to include an aperture for receiving a pin 378 to facilitate pivotal attachment to the carriage assembly 26. The indicator 372 is further shown to include a riser point 380 adapted to contact the workpiece engagement member 374 and a forwardly located portion 382, or tip, for co-operating with the scale 376 which is stamped with indicia incrementally representing the amount of material that is being removed from workpiece 29 during a pass through the workpiece opening 28. In one application, the scale 376 is stamped with indicia which begin at .05 inches and increases in increments by .05 inches.

The workpiece engagement member 376 is shown to include a mounting flange 384 having apertures adapted to receive pins 386 for attachment to the carriage assembly 26. Integrally formed with the mounting flange 384 is a forwardly extending workpiece engaging portion 388. The workpiece engaging portion 240 is inwardly curved to facilitate entry of the workpiece 29 therepast.

Alternative to the independent construction of the workpiece engagement portion 374 and indicator 372, the material removal indicator assembly 370 of the present invention can be constructed to include a single integrally constructed component. In this regard, the riser point 380 of the indicator 372 may alternatively be constructed to integrally include a forwardly extending portion (not shown) intended for direct engagement with the workpiece 29. In one application, such a forwardly extending portion would be configured similarly to the forwardly extending workpiece engaging portion 388 of the workpiece engagement portion 374.

In use of the exemplary material removal indicator assembly 370 illustrated, the workpiece engagement portion 374 is resiliently displaced as the workpiece 29 is introduced within the workpiece opening 28. This displacement of the workpiece engagement portion 374 correspondingly results in rotation of the indicator 372 about the pin 378 through contact of the workpiece engagement portion 374 with the riser point 380. The riser point 380 is located on the indicator 372 and is positioned in relationship to the pivot axis defined by the pin 378 such that pivotal displacement of the workpiece engagement portion 374 is magnified by movement of the indicator 372 in front of the scale 376. As a result, small differences in the amount of material to be removed from the workpiece 29 may be readily discerned.

With reference to Figures 6 and 7, a scale magnification assembly 400 constructed in accordance with the teachings of the present invention will be described. The scale magnification assembly 400 is adapted to co-operate with the scale 106 attached to the carriage assembly 26 for indicating the desired thickness for a workpiece 29. The scale magnification assembly 400 is shown to include a window portion 402 and an attachment portion 404. The scale magnification assembly 400 is preferably constructed of polycarbonate and is operative for magnifying scale indicia (not shown) located behind the window portion 402. Construction of the scale magnification assembly 400 from polycarbonate serves to reduce parallax and provide for fine reading of the scale indicia. The scale magnification assembly 400 is further shown to include a metal blade 406 horizontally mounted to a rear surface 407 of the window portion 402 which assists in visually identifying appropriate scale indicia. Finally, the mounting portion 404 of the scale magnification assembly 400 is formed to include an aperture (not shown) through which a threaded fastener 408 passes for releasably attaching the scale magnification assembly 400 to the planing machine 10.

## Claims

1. Apparatus (10) for performing a forming operation on a workpiece (29) the apparatus (10) comprising;
a frame (12);
a carriage assembly (26) interconnected to the frame (12), said carriage assembly (26) including a workpiece forming element (58);
a workpiece support surface (22) disposed relative to the carriage assembly (26) so as to define a workpiece opening (28) therebetween; and
one of the carriage assembly (26) and the workpiece support surface mounted within the apparatus (10) for selective bi-directional movement along a path of travel, the other of the carriage assembly (26) and the workpiece support surface (22) fixedly mounted within the apparatus (10), characterised in that the apparatus further comprises;
a material removal indicator assembly (370) for visually indicating the amount of material removed from the workpiece (29), during a pass through the workpiece opening (28) the indicator assembly (370) including an indicator (372) attached to the carriage assembly (26), a workpiece engaging member (374) adapted to be displaced by the workpiece (29) as the workpiece (29) is passed through said workpiece opening (28) and a scale portion (376) stamped with indica incrementally representing the amount of material being removed from the workpiece (29) during a pass through the workpiece opening (28), the indicator (372) being located relative to the workpiece engaging member (374) and the scale (376) such that displacement of the workpiece engaging member (374) results in a corresponding magnified movement of the indicator (372) relative to the scale portion (376).

2. Apparatus according to claim 1 characterised in that the indicator (372) is pivotally attached to the said carriage assembly (26).

3. Apparatus according to claim 1 or claim 2 characterised in that the workpiece engaging member (374) is fixedly attached to the carriage assembly (26), the workpiece engagement member (374) being resiliently deflectable in response to movement of the workpiece (29) through the workpiece opening (128).
